# EUROPEAN PATENT APPLICATION

(11) **EP 3 367 474 A1**
(43) Date of publication of application: **29.08.2018**
(21) Application number: 17157613.5
(22) Date of filing: 23.02.2017
(51) Int. Cl.: H01M 2/34, H01M 10/42, B60L 11/18

(54) **CONTROL UNIT, BATTERY CELL, CELL MODULE, BATTERY, AND APPARATUS**

(71) Applicant: Robert Bosch GmbH, 70442 Stuttgart (DE); Lithium Energy and Power GmbH & Co. KG, 70469 Stuttgart (DE)
(72) Inventor: Natzschka, Urs, 30559 Hannover (DE); Korn, Christian, 70190 Stuttgart (DE); Frese, Thomas, 58706 Menden (DE); Wiesemborski, Ulf, 24944 Flensburg (DE)

(57) **Abstract**

The present invention concerns a control unit (50) for a fast discharge and/or shut down unit (30) of a battery cell (10), the control unit (50) comprising (i) a control part (51) configured to control the operation of the fast discharge and/or shut down unit (30) depending on the existence or non-existence of a fast discharge and/or shut down state and (ii) an actuating and/or signaling part (52) configured to detect and signal to the controlling part (51) the existence or non-existence of a fast discharge and/or shut down state, wherein the actuating and/or signaling part (52) is configured to be located externally and/or remotely to the battery cell (10), the fast discharge and/or shut down unit (30) and/or the control part (51).

## Description

### State of the Art

The present invention concerns a control unit, a battery cell, a cell module, a battery, and an apparatus. The present application in particular concerns a control unit for a fast discharge and/or shut down unit of a battery cell.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

DE 10 2011 106 855 A1 and US 2016/0240894 disclose emergency systems for disconnecting traction batteries in electric or hybrid vehicles in case of an accident or any other emergency conditions.

In order to avoid such a hazardous behavior, battery cells have been equipped with fast discharge and/or shut down units, for instance together with certain separator configurations within the electrochemical part. The fast discharge and/or shutdown units may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

In view of the safety aspects, the provision of a fast discharge and/or shut down unit as such may not be sufficient in order to cover all possible dangerous situations. In particular, there may arise situations - for instance after an accident or during transportation or maintenance - where the energy content of an underlying battery system is still present yielding danger to persons trying to handle the apparatus, for instance a vehicle. In such situations with fast discharge and/or shut down unit alone does not provide sufficient safety aspects to the handling persons.

### Disclosure of the invention

The control unit for a fast discharge and/or shut down unit according to the present invention as defined in independent claim 1, however, has the advantage of enabling an on-demand operation of an underlying fast discharge and/or shutdown unit provided in a battery cell, cell module or battery in order to offer a willful and intended passivation besides passivation situations introduced by internal states of the battery cell. This is achieved by a control unit for a fast discharge and/or shut down unit of a battery cell according to independent claim 1, by having provided (i) a control part which is configured in order to control the operation of the fast discharge and/or shut down unit depending on the existence or non-existence of a fast discharge and/or shut down state and (ii) an actuating and/or signaling part configured to detect and signal to the controlling part the existence or non-existence of a fast discharge and/or shut down state, wherein the actuating and/or signaling part is configured to be located externally and/or remotely to the battery cell, the fast discharge and/or shut down unit and/or the control part. By the inventive measures besides the internal status of a battery cell - e.g. based on the thermal budget and/or electrical properties - other physical parameters or a pure on-demand operation of the fast discharge and/or shut down device can be achieved by the remote and/or separate positioning of the actuating and/or signaling part.

The dependent claims contain advantageous embodiments of the present invention.

The actuating and/or signaling part may concretely be realized by different means. According to a preferred embodiment of the control unit the actuating and/or signaling part may be formed as or may comprise a switch, a push button, a key button, a sensor configured in order to measure the value of a physical property, in particular pressure, force, acceleration and/or temperature.

On the one hand a switch, a push button or a key button may be used for an on-demand operation, for instance by maintenance personnel or the like. On the other hand providing a sensor may enable activation of the fast discharge and/or shutdown unit based on other physical parameters then normally used based on the internal chemical and/or physical state of the respective battery cell.

In addition or alternatively, the actuating and/or signaling part may be formed as a receiver unit for receiving an external activation signal and for providing a corresponding signal to the control part for activating an underlying fast discharge and/or shutdown unit.

In order to establish a connection between the actuating and/or signaling part and the control part of the control unit certain transmission lines may be used.

However, according to a further improvement of the control unit according to the present invention the actuating and/or signaling part may be wirelessly connected or connectable to the control part and/or to an external entity, in particular to a security unit, to a cell phone network and/or to an external shutdown unit, in particular a remote control unit.

Under such circumstances it is in particular possible that the actuating and/or signaling part is RF connectable to the control part and/or to an external entity and configured to realize data exchange with set external entity, in particular for exchanging information regarding the status, service or maintenance, transport and/or storage of a battery cell, a cell module and/or a battery.

Different protocols for internal and/or external vacation may be used, for instance WLAN, Bluetooth or any other wireless protocol.

For a simple and/or reliable operation of the control unit according to the present invention the actuating and/or signaling part may be configured to be mounted or mountable on a battery housing of an underlying battery cell, cell module or battery and/or a component - in particular a housing - of an underlying apparatus comprising an underlying battery cell, cell module or battery for energizing the apparatus.

Preferably, the control part may be configured in order to be located or locatable externally and/or remotely to the battery cell, a cell module, a battery, the fast discharge and/or shut down unit and/or the control part.

Additionally or alternatively, the control part may be configured in order to be mounted or mountable on a battery housing of an underlying battery cell, cell module or battery and/or a component - in particular a housing - of an underlying apparatus comprising an underlying battery cell, cell module or battery for energizing the apparatus.

In order to increase the degree of safety and flexibility a single control unit may be used in connection with pluralities of battery cells, cell modules and/or batteries.

In particular the control part may be configured in order to be connectable to a plurality of actuating and/or signaling parts and/or to a plurality of fast discharge and/or shut down units of a plurality of battery cells, cell modules and/or batteries.

Additionally or alternatively the control part may be configured in order to selectively operate single fast discharge and/or shut down units or groups of plural fast discharge and/or shut down units of a plurality of fast discharge and/or shut down units and in particular entire cell modules or groups thereof and/or entire batteries or groups thereof.

According to a further aspect of the present invention a battery cell is provided.

The battery cell according to the present invention has the advantage of supporting the effects due to a fast discharge operation by offering the opportunity to electrically separate a battery cell or a part thereof from a parallel arrangement such that the separated part does not contribute to the overall thermal budget.

This is achieved by the battery cell by comprising
(1) first and second battery cell terminals for an external contact of the battery cell,
(2) an electrochemical part, preferably formed as or comprising a jelly roll or an electrode stack configuration, connected to the battery cell terminals,
(3) a fast discharge unit connected to the battery cell terminals in parallel to the electrochemical part and configured to discharge the battery cell under first predetermined conditions by connecting the battery cell terminals via a resistor, and
(4) a control unit or a connection to a control unit, wherein the control unit is formed according to the present invention.

The electrochemical part of the inventive battery cell preferably comprises a positive electrode, a negative electrode, an electrolyte component having a conductive salt component and a solvent component, and a separator.

The degree of security of the inventive battery cell can be further increased if the separator is configured to become at least partially impermeable for ions generated inside of the electrochemical part upon reaching a predefined temperature.

The degree of reliability of the battery cell can be further increased if (a) the fast discharge unit is configured to discharge the battery cell by means of a first current flowing through the battery cell and the fast discharge unit by connecting the first and second battery cell terminals via the resistor of the fast discharge unit and (b) the resistor is in particular selected to cause the first current during a current flow through the battery cell and the fast discharge unit to heat the electrochemical part such that the separator reaches the predefined temperature.

In order to even better avoid hazardous situations for the battery cell, the resistance of the fast discharge unit may be selected in order to avoid a thermal runaway of the battery cell during the heating of the electrochemical part by the first current flowing through the electrochemical part and the fast discharge unit.

The inventive battery cell may comprise two battery cell terminals which are contactable from outside of the battery cell and an electrochemical part which is preferably constructed in the form of at least one jelly roll/electrode stack comprising a plurality of electrodes, an electrolyte comprising at least one conductive salt and at least one solvent, and at least one separator.

The at least one separator may be constituted such that it becomes at least partially impermeable for ions which can be generated inside of the electrochemical part, when the at least one separator reaches a predefined temperature.

In order to increase the safety of the inventive battery cell, the battery cell includes a fast discharge unit having at least one resistor. The fast discharge unit is connectable between the two battery cell terminals and configured to discharge the battery by means of a first current flowing through the battery and the fast discharge unit.

More particularly, a first resistance value of the at least one resistor may be selected in such a way, that the first current causes during a flowing through of the battery and the fast discharge unit such a heating of the electrochemical part, that the at least one separator reaches the predefined temperature.

In other words, within a few milliseconds after activation of the fast discharge the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be discharge very fast in comparison to the slower deinsertion/insertion reaction of the electrodes, to the slow diffusion through the solid-electrolyte interface (SEI) and to the slow diffusion in the active material. This causes a strong separation of charge carries in front of the electrode which causes a further increasing of electrode polarization and a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

In addition, the present invention also refers to a cell module comprising a plurality of battery cells formed according to the present invention.

The present invention further concerns a battery comprising a plurality of battery cells and/or a plurality of cell modules, wherein one or a plurality of the battery cells and/or of the cell modules is or are formed according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery individual fast discharge unit together with a respective control unit in particular with respective control parts and/or actuating and/or signaling parts.

Further on, the present invention also provides an apparatus and in particular a vehicle comprising an operation part and an energizing part for energizing the operation part for its operation. According to the present invention the energizing part is or comprises one or a plurality of battery cells, cell modules and/or batteries, each according to the present invention.

### Brief description of the drawings

In the following section embodiments of the present invention are disclosed with reference to the enclosed figures.
- Figures 1 to 3: are schematically block diagrams describing different embodiments battery cells according to the present invention comprising variations of the underlying control unit based on different actuating and signaling parts.
- Figures 4 and 5: give schematic view on an embodiment of a battery according to the present invention.
- Figure 6: is a schematic side view of an embodiment of the battery cell according to the present invention.

### Embodiments of the present invention

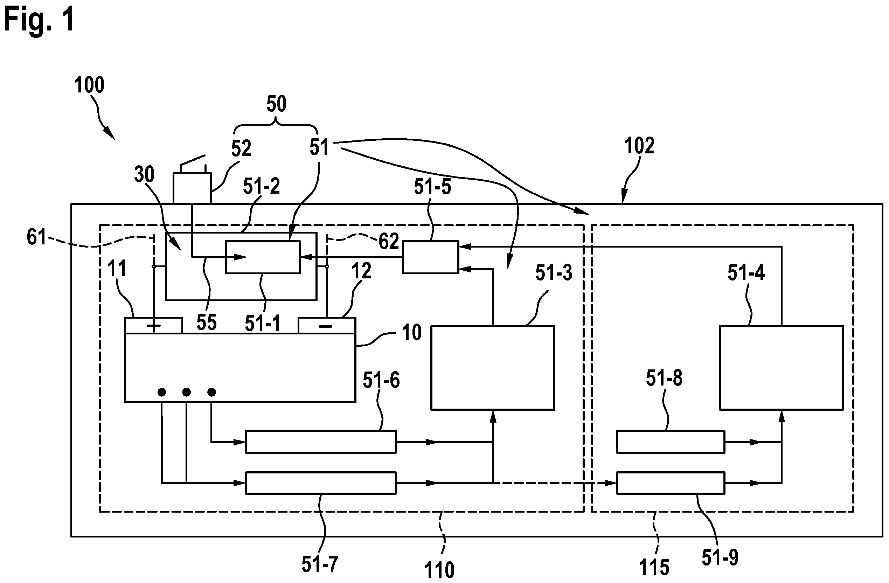

In the following, embodiments and the technical background of the present invention are described in detail by taking reference to accompanying figures 1 to 6. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

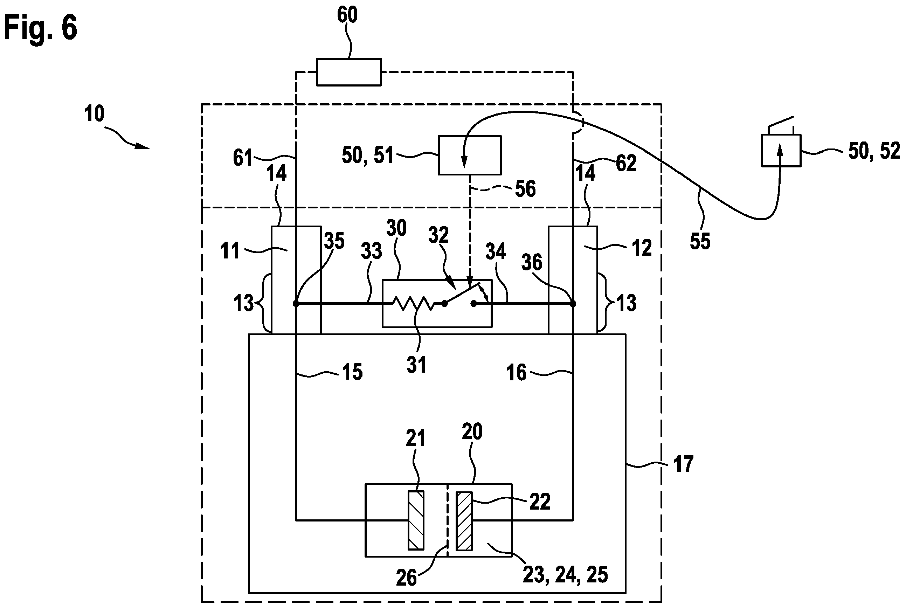

Before describing the concept of the present invention in detail, some of the aspects of an underlying fast discharge and/or shutdown device will be described in the following by taking reference to figure 6.

Figure 6 is a schematic block diagram representing a side view of an embodiment of the battery cell 10 according to the present invention.

The battery cell 10 shown in Figure 6 comprises in a housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The battery cell 20 is connected via terminal lines 15 and 16 to first and second battery cell terminals 11, 12 which are configured for establishing an external contact, e.g. for supplying electric power via supply lines 61, 62 to a load 60 in order to run a particular device or apparatus providing the load 60.

Each of the first and second battery terminals 11, 12 comprises a connection side part 13 for establishing a connection to the battery cell 20 and its terminal lines 15, 16 on the one hand and a fast discharge unit 30 to be described below on the other hand.

In addition, the first and second battery terminals 11, 12 also comprise an external side part 14 for being contacted to respective supply lines 61, 62 connected to the load 60.

In addition to the terminal lines 15, 16 for connecting the battery cell 20, at connection nodes 35, 36 discharge lines 33 and 34 are provided in the connection side part 13 for electrically connecting to the connection side parts 13 of the first and second battery cell terminals 11, 12 the fast discharge unit 30 which is configured in order to perform a fast discharge of the battery cell 20 under certain conditions and in order to thereby avoid hazardous situations.

As shown schematically in figure 6, this may be done by operating a discharge switch 32 for closing the connection between the connection nodes 35 and 36 for discharging the battery cell 10 and its electrochemical part 20 via the serially enclosed resistor 31 having an appropriate resistance value.

On the one hand, the resistance value of the resistor 31 is chosen to achieve a discharge of the battery cell 20 as fast as possible but simultaneously to avoid a thermal runaway of the battery cell 10 and its electrochemical part 20.

In order to further support the safety aspects implemented by the fast discharge and shut down unit 30, a control unit 50 is provided according to the present invention. The control unit 50 is configured in order to disconnect the electric conducting path 80 of a respective battery cell terminal 11, 12, in the case of figure 1 of the first battery cell terminal 11.

The operations of the fast discharge unit 30 on the one hand and of the control unit 50 on the other hand may be triggered by first and second predetermined conditions which may also be equal and/or which may depend on each other.

In particular, the operation of the fast discharge unit 30 and of the control unit 50 may be designed such that the control unit 50 commences its operation not before the beginning of the operation of the fast discharge unit 30 and preferably with a particular delay after the fast discharge has started.

The control unit 50 as designed according to the present invention comprises a control part 51 and a actuating and/or signaling part 52 which are connected to each other via a connection 56 which may be wirelessly or based on any kind of connection line. The connection 56 may be referred to as an external connection.

Via an external connection 56, the control part 51 of the control unit 50 is capable of conditionally initiating operating the fast discharge and/or shut down unit 30.

Via connection with the external connection 56, the control part 51 and in particular the entire control unit 50 may be separated and externally be mounted with respect to the battery cell 10 and/or the fast discharge and shut down 30.

The conditions for operating the fast discharge and/or shut down unit 30 may be settled based on the conditions and the operation state of the electrochemical part 20 of the battery cell 10 and - according to the present invention - additionally on external fast discharge and/or shut down conditions.

These external conditions are due to the externally and/or remotely positioning of the actuation and signaling part 52 when compared to the electrochemical part 20, the battery cell 10 and its fast discharge and/or shut down unit 30 and may be realized based on sensing a physical property established externally to the battery cell 10 and/or an interruption of the battery cell's operation intended by actuating the actuating and signaling part 52 by a user.

Figures 1 to 3 are schematic block diagrams describing different batteries 100 according to the present invention and comprising variations of the underlying control unit 50 based on different actuating and signaling parts 52.

Each of the batteries 100 comprises one or a plurality of battery modules 110 each having one or a variety of battery cells 10 formed according to the present invention.

One or plural of the battery cells 10 are equipped with a fast discharge and/or shutdown unit 30 formed as a or as a part of safety circuitry 51-2 having a driver 51-1 which can be triggered internally by an abuse detection unit and/or by an internal short detection unit 51-4 which receive their input to be analyzed from different sensor sources 51-6 to 51-9 which may provide data describing an internal status of the cells 10, the modules 110 and/or the entire battery 100 based on mechanical impact, force, acceleration, pressure, temperature, voltage, electric current and/or power. The output of the abuse detection unit 51-3 and in turn a short detection 51-4 are combined in a combination unit 51-5.

According to the present invention the fast discharge and/or shutdown unit 30 cannot only be triggered internally but also by measures which are in relation to the battery cell 10, the module 110 and the battery 100 situated externally.

This is achieved by having provided according to the present invention a separate and/or remote actuating and/or signaling part 52 as a part of the control unit 50 according to the present invention. The actuating and/or signaling part 52 is connected to the control part 51 by means of an external connection 55.

According to figure 1, the actuating and/or signaling part 52 may be formed as a switch or push button which is e.g. externally attached to a battery housing 102.

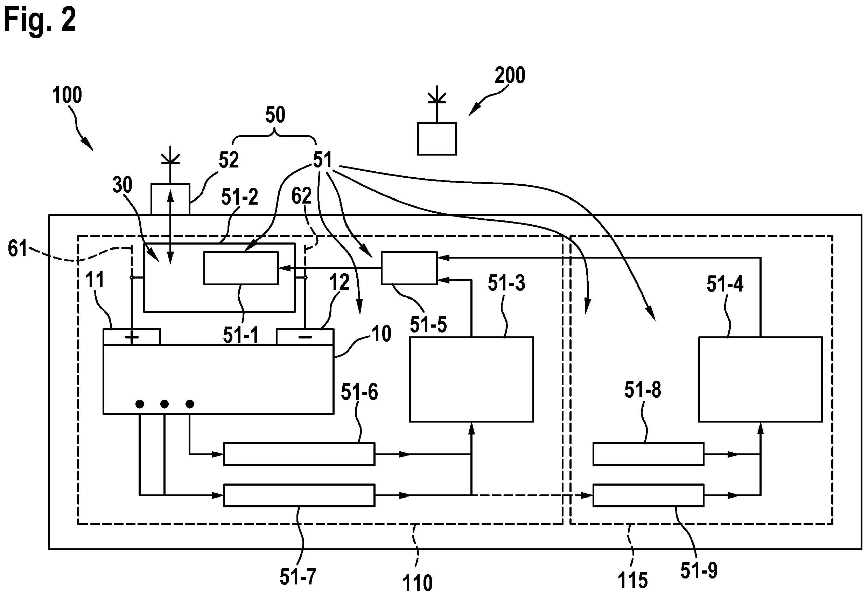

According to figure 2, the actuating and/or signaling part 52 may be configured in order to receive from an external entity 200 wirelessly an activation command upon the receipt of which the actuating and signaling part 52 gives a trigger signal via the internal communication line 55 to the driver 51-1 for activating the fast discharge and/or shut down unit 30.

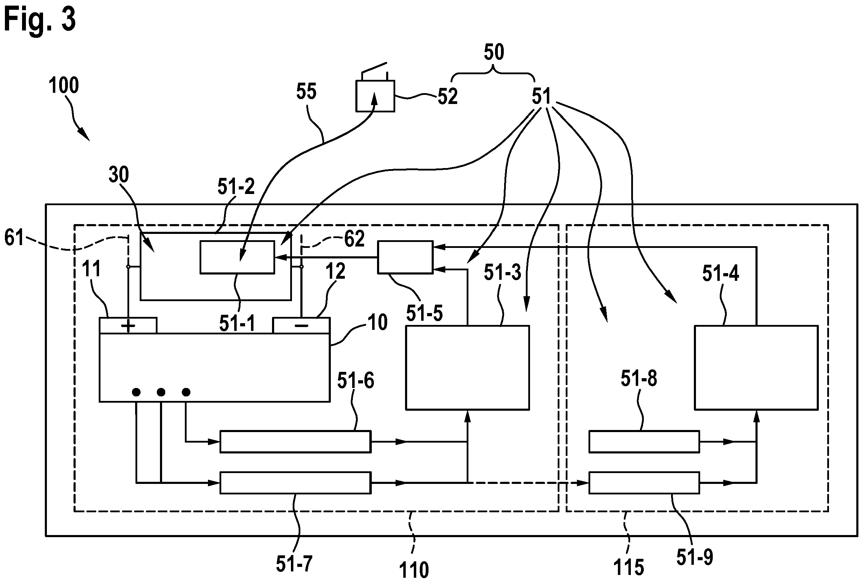

In the configuration according to figure 3, the remotely located and external actuating and/or signaling part 52 of the control unit 50 may be mounted at a place distant from the battery 100, for instance connected by means of a connection wire 55 and mounted to a component, for instance the body, of an underlying apparatus, for instance a vehicle or the like.

Such an externally located actuating and/or signaling unit 52 can be reached by maintenance and emergency personnel in order to achieve a willful and intended shutdown of the underlying battery 100.

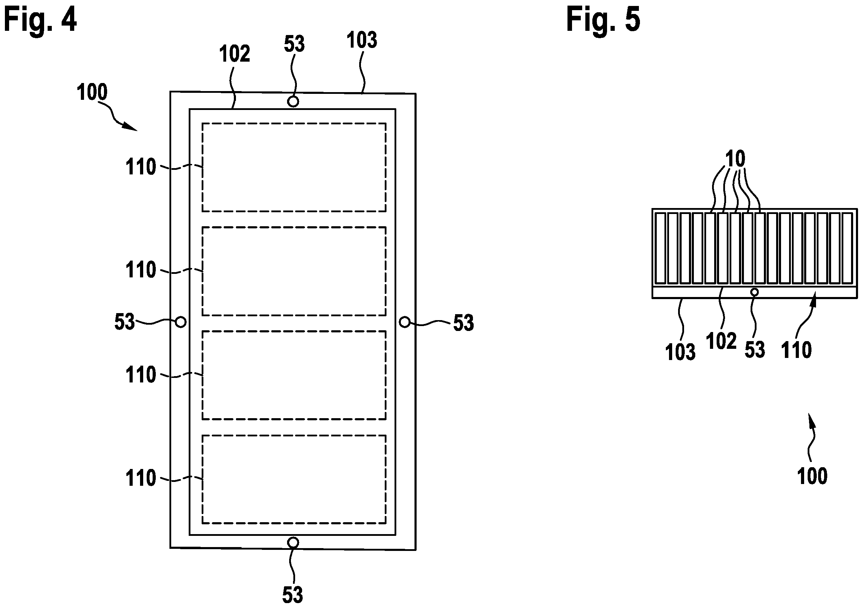

In the embodiment shown in figures 4 and 5, the battery 100 with a plurality of cell modules 110 each having a plurality of battery cells 10 is contained within a battery housing 102 and further surrounded by an external containment 103.

According to the present invention in the embodiment shown in figures 4 and 5, between the battery housing 102 and the second and outer containment 103 a plurality of pressure sensor 53 connected to - or being a part of - a remotely located actuating and/or signaling part 52 of an underlying control unit 50 is provided. If the pressure measured by any of the pressure sensor 53 increases beyond a certain limit, the control unit 15 is capable of triggering the driver 51-1 in order to actuate the fast discharge and/or shut down unit 34 passivation of one or a plurality of battery cells 10 of cell modules 110.

These and further features, properties and advantages of the present invention will be further discussed in the following:
For battery driven electric or hybrid vehicles as well as for other applications, it is desired to have increasing energy densities of the underlying driving batteries, also in order to increase the operating range of the equipment to be energized by the underlying batteries.

Recently, lithium ion technology has become one of the most important technical focuses in this regard.

The higher the energy density is in the energy storing means, the higher is the risk in view of uncontrollable self-ignition, of internal short circuit conditions and/or of mechanical damages from external impact.

Dangerous situations arise in connection with damaged equipment to be energized, for instance vehicles or the like, but also during maintenance, transport, recycling and discharging of means for energy storage or apparatuses to be energized.

In addition, final discharge of batteries 100, cell module 110 and battery cells 10 is not without any risk as such.

One object underlying the present invention is to further increase the intrinsic safety for so-called fast discharge and/or shut down units developed for battery technologies in order to achieve a controlled passivation, discharge and/or shutdown of battery cells 10, cell modules 110 or batteries 100.

The present invention in particular considers a situation where there is no internal reason for shutting down the battery 100, cell module 110 or battery cell 10, but an external desire to do so.

Such a situation might occur during the process of discharging a battery which cannot be used anymore because of its decreased battery capacity or energy efficiency. A further situation occurs after an accident where a risk-free rescue or recovery of persons and equipment is desired but cannot be insured with common techniques.

It is therefore an object to provide means which enables a person to achieve an on-demand passivation of batteries 100, cell modules 110 and/or battery cells 10.

Such an on-demand passivation is also desired for situations where the batteries have to be transported or have to be intermittently stored, for instance before the final deconstruction.

Fast discharge and/or shutdown devices are generally configured in order to achieve a passivation by controlled short-circuiting of the battery terminals 11, 12 upon detection of unusual battery and/or operating conditions, for instance an internal short circuitry or the like. Under such conditions controlled short-circuiting leads to an increase of heat within the respective battery cells 10 and thereby irreversible melting of a provided separator 26 can be achieved leading to an irreversible passivation of the battery cell 10.

The present invention suggests providing means 50, 52 which refer to external conditions, i.e. external in view of the battery cells 10, the cell modules 110 and/or the batteries 100 in their entirety.

Therefore the control unit 50 is provided comprising an externally and/or remotely located actuating and/or signaling part 52 which may be realized as a switch at the battery side, but outside of the battery, and/or as a switch at any other location of the apparatus to be energized, for instance within or outside a vehicle. Alternatively or additionally remote control might also be envisaged.

In case of a RF-based remote control, a safe RF interface has to be ensured, in particular for providing irreversible commands for passivation of the battery 100, the cell modules 110 and/or the battery cells 10.

In addition a wireless interface can be used which also enables remote inquiry, remote maintenance and/or remote surveillance of the energized apparatus 60 and/or of the energizing battery 100, cell modules 110 and/or battery cells 10.

In this connection data regarding the state of the battery 100 may be inquired data regarding maintenance and/or surveillance of the battery 100, cell modules 110 and/or battery cells 10 may be exchanged. In this regard transport, intermittent or final storage and/or deconstruction may be controlled.

## Claims

1. Control unit (50) for a fast discharge and/or shut down unit (30) of a battery cell (10), the control unit (50) comprising:
- a control part (51) configured to control the operation of the fast discharge and/or shut down unit (30) depending on the existence or non-existence of a fast discharge and/or shut down state and
- an actuating and/or signaling part (52) configured to detect and signal to the controlling part (51) the existence or non-existence of a fast discharge and/or shut down state,
wherein the actuating and/or signaling part (52) is configured to be located externally and/or remotely to the battery cell (10), the fast discharge and/or shut down unit (30) and/or the control part (51).

2. Control unit (50) according to claim 1,
wherein the actuating and/or signaling part (52) is formed as or comprises a switch, a push button, a key button, a sensor (53) configured in order to measure the value of a physical property, in particular pressure, force, acceleration, temperature.

3. Control unit (50) according to any one of the preceding claims,
wherein the actuating and/or signaling part (52) is wirelessly connectable to the control part (51) and/or to an external entity, in particular to a security unit, to a cell phone network and/or to an external shutdown unit, in particular a remote control unit (54).

4. Control unit (50) according to claim 3,
wherein the actuating and/or signaling part (52) is RF connectable to the control part (51) and/or to an external entity (200) and configured to realize data exchange with set external entity (200), in particular for exchanging information regarding the status, service or maintenance, transport and/or storage of a battery cell (10), a cell module and/or a battery (100).

5. Control unit (50) according to any one of the preceding claims,
wherein the actuating and/or signaling part (52) is configured to be mounted or mountable on a battery housing (102) of an underlying battery cell (10), cell module or battery (100) and/or a component - in particular a housing - of an underlying apparatus comprising an underlying battery cell (10), cell module or battery (100) for energizing the apparatus.

6. Control unit (50) according to any one of the preceding claims, wherein the control part (51) is configured
(i) to be located or locatable externally and/or remotely to the battery cell (10), a cell module, a battery (100), the fast discharge and/or shut down unit (30) and/or the control part (51) and/or
(ii) to be mounted or mountable on a battery housing (102) of an underlying battery cell (10), cell module or battery (100) and/or a component - in particular a housing - of an underlying apparatus comprising an underlying battery cell (10), cell module or battery (100) for energizing the apparatus.

7. Control unit (50) according to any one of the preceding claims, wherein the control part (51) is configured
(i) to be connectable to a plurality of actuating and/or signaling parts (52) and/or to a plurality of fast discharge and/or shut down units (30) of a plurality battery cells (10), cell modules and/or batteries (100) and/or
(ii) to selectively operate single fast discharge and/or shut down units (30) or groups of plural fast discharge and/or shut down units (30) of a plurality of fast discharge and/or shut down units (30) and in particular entire cell modules or groups thereof and/or entire batteries (100) or groups thereof.

8. Battery cell (10), comprising:
- first and second battery cell terminals (11, 12) for an external contact of the battery cell (10),
- an electrochemical part (20), preferably formed as or comprising a jelly roll or an electrode stack configuration, connected to the battery cell terminals (11, 12),
- a fast discharge and/or shut down unit (30) connected to the battery cell terminals (11, 12) in parallel to the electrochemical part (20) and configured to discharge and/or to shut down the battery cell (10) under first predetermined conditions by connecting the battery cell terminals (11, 12) via a resistor (31), and
- a control unit (50) or a connection (56) to a control unit (50), wherein the control unit (50) is formed according to any one of the preceding claims.

9. Battery cell (10) according to claim 8, wherein
- the electrochemical part (20) comprises a positive electrode (21), a negative electrode (22), an electrolyte component (23) having a conductive salt component (24) and a solvent component (25), and a separator (26),
- wherein the separator (26) is configured to become at least partially impermeable for ions generated inside of the electrochemical part (20) upon reaching a predefined temperature,
- the fast discharge unit (30) is configured to discharge the battery cell (10) by means of a first current flowing through the battery cell (10) and the fast discharge unit (30) by connecting the first and second battery cell terminals (11, 12) via the resistor (31) of the fast discharge unit (30),
- the resistor (31) is in particular selected to cause the first current during a current flow through the battery cell (10) and the fast discharge unit (30) to heat the electrochemical part (20) such that the separator (26) reaches the predefined temperature, and/or
- wherein the resistance (31) of the fast discharge unit (30) is selected in order avoid a thermal runaway of the battery cell (10) during the heating of the electrochemical part by the first current flowing through electrochemical part (20) and the fast discharge unit (30).

10. Cell module, comprising a plurality of battery cells (10) according to any one of claims 8 and 9.

11. Battery (100), comprising a plurality of cell module (100) according to claim 10 and/or a plurality of battery cells (10) according to any one of claims 8 and 9.

12. Apparatus and in particular vehicle, comprising:
- an operation part and
- an energizing part for energizing the operation part,
wherein the energizing part is or comprises one or a plurality of battery cells (10) according to any one of claims 8 and 9, cell modules according to claim 10 and/or batteries (100) according to claim 11.
